(19) Europäisches Patentamt
European Patent Office
Office européen des brevets

(11) **EP 2 395 341 B1**

(12) **EUROPÄISCHE PATENTSCHRIFT**

(45) Veröffentlichungstag und Bekanntmachung des Hinweises auf die Patenterteilung:
**14.08.2013 Patentblatt 2013/33**

(51) Int Cl.:
***G01N 15/00*** *(2006.01)*

(21) Anmeldenummer: **10165123.0**

(22) Anmeldetag: **07.06.2010**

(54) **Verfahren zur bestimmung der Aktuellen sorptionskapazität eines Formkörpertrockenmittels**

Method for determining the current sorption capacity of a moulded part drying agent

Procédé de détermination de la capacité de sorption actuelle d'un moyen de séchage d'un corps de formage

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**14.12.2011 Patentblatt 2011/50**

(73) Patentinhaber: **BOEHRINGER INGELHEIM INTERNATIONAL GMBH**
**55216 Ingelheim am Rhein (DE)**

(72) Erfinder:
• **Balthes, Eduard**
**55216 Ingelheim am Rhein (DE)**

• **Braun, Mathias**
**55216 Ingelheim am Rhein (DE)**

(74) Vertreter: **Simon, Elke Anna Maria et al**
**Boehringer Ingelheim GmbH**
**Binger Strasse 173**
**55216 Ingelheim am Rhein (DE)**

(56) Entgegenhaltungen:
**EP-A1- 0 560 504    EP-B1- 0 940 148**
**SU-A1- 1 038 836**

**Beschreibung**

Die Erfindung bezieht sich auf ein Verfahren zur Bestimmung der aktuellen Sorptionskapazität eines in einer Polymermatrix eingebundenes Trockenmittel aufweisenden Formkörpertrockenmittels.

Hochwirksame Arzneimittel, beispielsweise Oralia und vor allem Inhalativa, sind häufig unter dem Einfluss selbst sehr geringer Mengen von Feuchtigkeit instabil und neigen zur Zersetzung. Die Verpackung und gegebenenfalls auch die Umverpackung derartiger Arzneimittel trägt dem Rechnung, indem damit das Produkt vor Feuchtigkeit geschützt wird. So kann ein Feuchtigkeitsschutz dadurch erzielt werden, dass eine Verpackung des Arzneimittels in einer äußerst feuchtigkeitsundurchlässigen Hochbarriere-Folie erfolgt. Es ist aber auch üblich, das Arzneimittel zusammen mit einem Trockenmittel zu verpacken. Bekannt sind Trockenmittelbeutel aus feuchtigkeitsdurchlässigem Gewebe, in welchen ein loses Trockenmittel, wie beispielsweise Molekularsieb oder Silikagel, verpackt ist. Nachteil dieser Applikationsform ist, dass das Gewebe dieser Beutel nur begrenzt reißfest ist, bei der Verwendung dieser Trockenmittelbeutel die Aspekte der Kindersicherheit und des Verzehrs durch die Verschluckbarkeit der Beutel berücksichtigt werden muss und die Verarbeitung derartiger Beutel bei der Herstellung der Arzneimittelverpackung problembehaftet ist. Als Alternative zu Trockenmittel-Beuteln stehen daher seit einiger Zeit so genannte Trockenmittel-Karten zur Verfügung. Hierbei handelt es sich um ein Formkörpertrockenmittel im Scheckkartenformat, das aus einer Kunststoffmatrix mit darin eingearbeitetem Trockenmittel besteht. Derartige Trockenmittel-Karten können zusammen mit einem Arzneimittel, beispielsweise in einem Aluminium-Pouch als Umverpackung, verpackt werden, so dass dadurch ein ausreichender Feuchtigkeitsschutz des Arzneimittels gewährleistet ist. Die produktionstechnische Handhabung bei der Verpackung von Arzneimitteln einer solchen Trockenmittel-Karte ist weniger störanfällig als die Verarbeitung von Trockenmittel-Beuteln.

Um Trockenmittel-Karten einsetzen zu können, ist es notwendig, zuverlässig und schnell ermitteln zu können, wie hoch die aktuelle Sorptionskapazität oder Restsorptionskapazität einer Trockenmittel-Karte, zum Beispiel zum Zeitpunkt ihrer Anlieferung oder nach einer gewissen Lagerzeit, ist. Denn um die Stabilität und die Qualität eines möglichst trocken zu lagernden Produktes, insbesondere Arzneimittels, über die gesamte Haltbarkeitsdauer des Produktes sicher stellen zu können, muss sichergestellt sein, dass das verwendete Trockenmittel in einem definierten, bestmöglichen Zustand, beispielsweise mit höchstmöglicher Wasser-Restsorptionskapazität, verpackt wird. Es muss unter anderem ausgeschlossen werden, dass zum Beispiel ein Trockenmittel, das durch Feuchteaufnahme vorgeschädigt ist, mit dem Produkt/Arzneimittel verpackt wird, da ansonsten die Gefahr besteht, dass das Trockenmittel gegebenenfalls sogar Feuchtigkeit an das Produkt/Arzneimittel abgibt. Andererseits muss die geeignete Messmethode zur Bestimmung der Sorption so gut und hinreichend genau sein, dass lediglich Fehlware als zu verwerfendes Trockenmittelprodukt identifiziert, aber keine Gutware verworfen wird. Die in diesem Zusammenhang ausschlaggebende und zu messende physikalische Messgröße ist die in dem Trockenmittel vorhandene aktuelle Sorptionskapazität oder Restsorptionskapazität zur Ermöglichung der Aufnahme von Feuchte/Wasserdampf. Nur eine Trockenmittel-Karte, die noch ausreichend Wasser/Wasserdampf und/oder andere Sorbentien aufnehmen kann, ist für die Verarbeitung zusammen mit einem Feuchte empfindlichen Arzneimittel geeignet, dieses während seiner Lagerung in der Verpackung stabil zu halten bzw. erhalten.

Als bekannte Messmethoden bieten sich für die Bestimmung der aktuellen Sorptionskapazität oder Restsorptionskapazität von Trockenmittel-Karten das Aufheizen im Halogentrockner oder im Muffelofen an, wie es zum Beispiel auf der Webseite der Firma Sanner unter *http://www.sanner.de/unsere-standardprodukte/trokkenmittel-unserekernkompetenz/wirkprinzip-adsorption/?type=100* beschrieben wird. Hierbei wird durch Wägung vor und nach dem Aufheizen und Differenzbildung der Wassergehalt des Trockenmittels bestimmt. Von dem ermittelten Wassergehalt muss dann auf die jeweilige aktuelle Sorptionskapazität oder vorhandene Restsorptionskapazität umgerechnet werden. Um dies quantitativ korrekt tun zu können, muss in die Messmethode zur Bestimmung des Wassergehaltes eine rechnerische Korrektur eingebracht werden. Da diese Methode die Wägung des Trockenmittels umfasst und bei der Aufheizung sowohl Wasser auch als volatile Hilfsstoffe und bei einem eine Polymermatrix aufweisenden Trockenmittel auch die Polymermatrix selbst ausgetrieben werden können, ist die quantitative Rückrechnung auf den Wasseranteil bei diesen Verfahren sehr aufwendig und fehlerbehaftet. Andere bekannten Messmethoden sind die so genannte Karl-Fischer Ofenmethode oder die Coulombmetrische Karl-Fischer Methode. Auch hier wird wiederum der Wassergehalt gemessen und daraus auf die aktuelle Sorptionskapazität oder Restsorptionskapazität rückgeschlossen. Der Rückschluss vom Wassergehalt auf die aktuell noch bestehende Sorptionskapazität oder Restsorptionskapazität erfolgt in beiden Fällen unter der Annahme, dass die Gesamtsorptionskapazität des Trockenmittels, beispielsweise der Trockenmittel-Karte, langfristig konstant ist. Diese Methoden sind insofern nachteilig, als der Rückschluss aus dem Wassergehalt auf die aktuelle Sorptionskapazität oder Restsorptionskapazität mit dem Fehler bei der Bestimmung des Wassergehaltes und dem Fehler beziehungsweise dem Sicherheitspuffer bei der Quantifizierung der Gesamtsorptionskapazität behaftet ist. Dies hat zur Folge, dass unter dem Aspekt der Qualitätssicherung der Verarbeitungsspielraum inklusive der Lagerfähigkeit des in einer Polymermatrix eingebundenes Trockenmittel aufweisenden Formkörpertrockenmittels, d.h. der Trockenmittel-Karte, gegebenenfalls unnötig eingeschränkt wird.

Es ist Aufgabe der Erfindung, ein Verfahren der eingangs genannten Art zu schaffen, das relativ schnell, zuverlässig und genau die Ermittlung der aktuellen Sorptionskapazität oder Restsorptionskapazität eines Formkörpertrockenmittels ermöglicht.

Erfindungsgemäß wird die Aufgabe mittels der Merkmale des unabhängigen Patentanspruchs 1 gelöst, und insbesondere in dem das Formkörpertrockenmittel mechanisch zerkleinert wird, die aufgefangenen Zerkleinerungsprodukte in einem Klimagerät einer eine definierte Temperatur und einen definierten Feuchtigkeitsgehalt aufweisenden Atmosphäre ausgesetzt werden und die aktuelle Sorptionskapazität als Funktion der Massenzunahme der Zerkleinerungsprodukte ermittelt wird.

Aufgrund dieser Maßnahmen ist eine schnelle, direkte und ausreichend genaue Ermittlung der aktuellen Sorptionskapazität oder Restsorptionskapazität eines Formkörpertrockenmittels, insbesondere einer Trockenmittel-Karte, insbesondere für die Aufnahme von Feuchte/Wasser/Wasserdampf, aber auch anderer Sorbentien, gegeben. Ein besonderer Vorteil der Erfindung besteht zunächst darin, dass die aktuelle Sorptionskapazität oder Restsorptionskapazität als die für die Produktstabilität ausschlaggebende Größe und Eigenschaft direkt und in bisher nicht erzielbarer Genauigkeit messbar ist. Die direkte Messung der aktuellen Sorptionskapazität oder Restsorptionskapazität als der eigentlich relevanten physikalischen Größe hat zum einen den Vorteil, dass hierdurch mit optimierter Genauigkeit die Produktstabilität des zusammen mit dem Trockenmittel verpackten Produktes/Arzneimittels gesichert wird, und zum anderen darin, dass durch die Messung und Ermittlung dieser physikalischen Größe auch der zeitliche Verarbeitungsspielraum eines Formkörpertrockenmittels an der Produktionslinie verbessert wird, da Schlechtware mit optimierter Genauigkeit identifizierbar ist und keine Gutware unnötig verworfen wird. Darüber hinaus lässt sich eine Dokumentation erstellen, die es ermöglicht, Formkörpertrockenmittel zu identifizieren, das in seiner Sorptionseigenschaft über gemäß einer Spezifikation garantierte Werte hinausgeht, und den damit verbundenen Qualitätsvorsprung zu quantifizieren. Dadurch, dass die Bestimmung und Ermittlung der aktuellen Sorptionskapazität oder Restsorptionskapazität anhand gemahlener Zerkleinerungsprodukte des Formkörpers erfolgt, ist es möglich, die Sorptionskapazität oder Restsorptionskapazität in einem vertretbaren Zeitraum zu ermitteln. Wie nachstehend anhand eines Ausführungs- und Vergleichsbeispieles dargelegt wird, ist es auch möglich, die Sorptionskapazität an einem unzerkleinerten Formkörpertrockenmittel direkt zu ermitteln. Dies ist aber nicht in einem vertretbaren Zeitrahmen möglich. Das Verfahren ist universell für verschiedenste Materialien des Formkörpertrockenmittels, d.h. die verschiedensten Polymere, wie HDPE, LDPE, PS, aber auch andere als Matrix verwendbare Trägermaterialien, sowie für die Verwendung vielfältigster Trockenmittel, wie Silikagel, Molekularsieb verschiedener Porengröße, Bentonit, einsetzbar. Außerdem lässt sich mit dem Verfahren die Sorptionskapazität von Formkörpertrockenmittel für die Aufnahme verschiedenster Sorbentien ermitteln.

Mit dem Verfahren ist es auch möglich, vorkonditioniertes Trockenmittel auf seine Sorptionskapazität hin zu prüfen und die Sorptionskapazität zu ermitteln. Bei vorkonditioniertem Trockenmittel handelt es sich um solches, das einen Restbestandteil an Feuchte aufweist, da das damit zu verpackende Produkt/Arzneimittel nicht in den Bereich ganz niedriger Feuchtigkeitsgehalte heruntergetrocknet werden soll.

Da die Bestimmung der Sorptionskapazität als Funktion der Massenzunahme der Zerkleinerungsprodukte ermittelt wird, werden vorteilhafterweise die Zerkleinerungsprodukte in dem Klimagerät auf einer Waage aufliegend der definierten Atmosphäre ausgesetzt. Bei der Waage handelt es sich zweckmäßigerweise um eine Analysewaage.

In Ausgestaltung wird die Sorptionskapazität nach einer bestimmten Aufenthaltsdauer der Zerkleinerungsprodukte in dem Klimagerät ermittelt. Hierdurch ist es möglich, über eine bis zur vollständigen Ausschöpfung der Wasser- oder Feuchteaufnahme der Sorptionskapazität andauernde Zeit im Wege einer zeitabhängigen Kurve den Verlauf der Wasser- oder Feuchteaufnahme der Zerkleinerungsprodukte des Formkörpertrockenmittels zu ermitteln. Es ist aber auch möglich, ein so genanntes Abbruchkriterium, beispielsweise das Erreichen einer bestimmten Sorptionskapazität, einzuführen und durch Abbruch der Messung zu diesem bestimmten Zeitpunkt die Messzeit weiter zu verkürzen. Dazu kann eine quantitative Beschreibung des Abbruchkriteriums aufgestellt werden, die auf einem mathematischen Algorithmus zur Bestimmung der minimalen Messzeit in Abhängigkeit von den Anforderungen an die Genauigkeit der Messung der aktuellen Sorptionskapazität oder Restsorptionskapazität basiert.

Besonders geeignete Vorrichtungen und Geräte zur Zerkleinerung des Formkörpertrockenmittels sind Compact Disc-Schredder, insbesondere solche der Sicherheitsklassen 3 und 4, Zerspanwerkzeuge oder Mahlwerkzeuge, wie beispielsweise Planetenmahlwerke oder aber auch das Mahlwerk üblicher elektromotorbetriebener Kaffeemühlen. Die Erfindung zeichnet sich daher weiterhin dadurch aus, dass das Formkörpertrockenmittel mittels eines Mahlwerks, eines Zerspanwerkzeuges oder eines Compact-Disc-Schredders zerkleinert wird.

Zur Erzielung einer ausreichend feinen Zerkleinerung des Formkörpertrockenmittels wird bevorzugt das Formkörpertrockenmittel zunächst in einem Compact Disc-Schredder vorzerkleinert und anschließend in einem Mahlwerk endzerkleinert.

Es versteht sich, dass die vorstehend genannten und nachstehend noch zu erläuternden Merkmale nicht nur in der jeweils angegebenen Kombination, sondern auch in anderen Kombinationen verwendbar sind.

Der Rahmen der Erfindung ist nur durch die Ansprüche definiert.

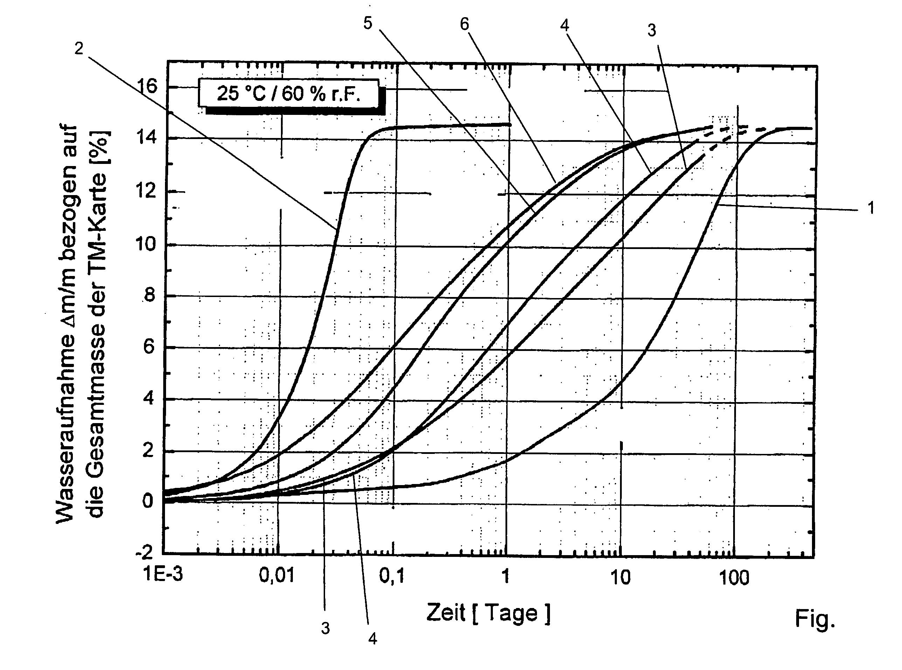

Die Erfindung wird im Folgenden anhand eines Ausführungsbeispieles unter Bezugnahme auf die zugehörigen Zeichnungen näher erläutert. Die einzige Fig. zeigt ein Diagramm, in dem für unterschiedlich große Zerkleinerungsprodukte die Wasseraufnahme über die Zeit abgetragen ist.

Die aktuelle Sorptionskapazität oder Restsorptionskapazität eines Formköpertrockenmittels, insbesondere einer so genannten Trockenmittel-Karte im Scheckkartenformat, lässt sich unter Zugrundelegung der Formel

$$S = \frac{\Delta m}{m_0} = \frac{m_{Sättigung} - m_0}{m_0}$$

ermitteln. In dieser Gleichung wird die Sorptionskapazität S als relative Massenzunahme berechnet, wobei $m_0$ die Startmasse des Formkörpertrockenmittels oder des Formkörpertrockenmittels in Form der Zerkleinerungsprodukte im trockenen Zustand und $m_{Sättigung}$ die Masse des Formkörpertrocknungsmittels beziehungsweise der Zerkleinerungsprodukte im gesättigten (feuchten) Zustand ist. Diese in Prozent angegebene relative Wasseraufnahme oder Massenzunahme ist in der Fig. über der in einem logarithmischen Maßstab angegebenen Zeit aufgetragen. Um die aktuelle Sorptionskapazität oder Restsorptionskapazität von Trockenmittel-Karten zu ermitteln, werden eine oder mehrere Trockenmittel-Karten oder die daraus hergestellten Zerkleinerungsprodukte auf einer Analysenwaage hinreichender Genauigkeit direkt und unmittelbar, d.h. ohne vorhergehende Behandlung, in einem Klimagerät, beispielsweise einem Klimaschrank, bei einer definierten Temperatur und einem definierten Feuchtigkeitsgehalt in einer dadurch bestimmten Atmosphäre gelagert beziehungsweise einer solchen Atmosphäre ausgesetzt. Direkt und unmittelbar bedeutet in diesem Zusammenhang, dass das der jeweiligen Messung zugrunde liegende Formkörpertrockenmittel, d.h. die jeweilige oder die jeweiligen Trockenmittel-Karten, zunächst aus ihrer luft- und wasserdichten Schutzverpackung entnommen werden, dann in einer geeigneten Zerkleinerungsvorrichtung, wie beispielsweise einem Compact Disc-Schredder, einem Zerspanwerkzeug und/oder einem Mahlwerk zerkleinert und auf die Waage im Klimagerät gegeben wird/werden. Eine definierte Atmosphäre kann beispielsweise eine Temperatur von 25 °C und eine Feuchtigkeit von 60 % r.F. aufweisen. Die in einer solchen Atmosphäre ermittelte Sorptionskapazität S wird dann als S(25°C/60%r.F.) bezeichnet.

Die in einer solchen Atmosphäre ermittelten Werte sind in der Fig. dargestellt, die als Kurve 1 den zeitlichen Verlauf der Sorptionskapazität einer komplett als Einheit der definierten Atmosphäre von 25°C und 60 % relativer Feuchte ausgesetzten Trockenmittel-Karte zeigt. Als Vergleich dazu zeigt die Kurve 2 den zeitlichen Verlauf der Sorptionskapazität des in der Trockenmittel-Karte verwendeten eigentlichen Feuchte aufnehmenden Trockenmittels, im Ausführungsbeispiel reines Molekularsieb. Der Vergleich der Kurven 1 und 2 zeigt, dass die aktuelle Sorptionskapazität oder Restsorptionskapazität der Trockenmittel-Karte eine völlig andere Zeitabhängigkeit als der Kurvenverlauf 2 des reinen Molekularsiebs zeigt. Bezogen auf den Sorptionswert von 10 % ist die Messung der Sorptionskapazität der Trockenmittel-Karte etwa 2000 mal langsamer als die des losen Molekularsiebs. Würde man mit der angewandten Messmethode der direkten Ermittlung der Sorptionskapazität die unzerkleinerte Trockenmittel-Karte messen, so würde dies eine Messzeit von 200 Tagen erfordern, was im Rahmen einer laufenden Produktion völlig unakzeptabel wäre.

Die Wartezeit lässt sich dadurch verringern, dass das Formkörpertrockenmittel, d.h. die Trockenmittel-Karte, zerkleinert und die Bestimmung der Sorptionskapazität anhand der Zerkleinerungsprodukte durchgeführt wird. Die durch diese Maßnahme zu erzielende Zeitverkürzung lässt sich den weiteren Kurven 3, 4, 5 und 6 der Fig. entnehmen. Die Kurven 3 und 4 zeigen das Ergebnis, das erhalten wird, wenn die Trockenmittel-Karte mit einem Compact Disc-Schredder der Datensicherheitsstufe 3 (Kurve 3) oder der Datensicherheitsstufe 4 (Kurve 4) zerkleinert wird. Auch in diesen Fällen wurden die aus einer Trockenmittel-Karte erzeugten Zerkleinerungsprodukte im Klimagerät auf einer Analysenwaage bei 25 °C und 60 % r.F. gelagert und es wurde regelmäßig die Massenzunahme durch Sorption aufgrund von aufgenommener Feuchtigkeit bestimmt. Der Compact Disc-Schredder der Datensicherheitsstufe 3 erzeugt die größten Partikel. In der Sorptionskinetik sind diese Partikel die langsamsten, da durch die Zerkleinerung der Trockenmittel-Karte zwar die Oberfläche vergrößert wurde, das Volumen der entstandenen Partikel jedoch immer noch relativ groß ist. Der Compact Disc-Schredder mit der Datensicherheitsstufe 4 (Kurve 4) erzeugt feinere Partikel. Dadurch kann die Messzeit bereits um den Faktor 20 reduziert werden. Der Vorteil der Verwendung eines Compact Disc-Schredders liegt in der aufgrund seines Einsatzes in der Datenträgervernichtung definierten Größe der erzeugten Zerkleinerungsprodukte oder -partikel. Die Messzeit lässt sich noch weiter verkürzen, wenn die Trockenmittel-Karte in noch kleinere Partikel zerkleinert wird. Dies ist durch Einsatz eines Zerspanwerkzeuges möglich. In diesem Falle wird die Kurve 5 bei ansonsten gleichen Bedingungen gemessen. Eine noch weitere Zerkleinerung und damit weitergehende Beschleunigung der Messzeit lässt sich - wie durch die Kurve 6 dargestellt - durch die Zerkleinerung des Formkörpertrockenmittels in einem Mahlwerk erzeugen. Bei dem verwendeten Mahlwerk kann es sich um das Mahlwerk einer handelsüblichen Kaffeemühle, vorzugsweise aber jedoch um ein Planetenmahlwerk, handeln. In diesem Falle wird die Trockenmittel-Karte zunächst in einem Compact Disc-Schredder vorzerkleinert und anschließend werden die dadurch erhaltenen Zerkleinerungsprodukte in dem Mahlwerk endzerkleinert. Die hierdurch erzeugten Zerkleinerungsprodukte sind sehr fein und durch eine sehr schnelle Sorption gekennzeichnet. Die Sorption dieser Zerkleinerungsprodukte ist ungefähr um den Faktor 100 schneller als die der unzerstörten Trokkenmittel-Karte, was ein Vergleich der Kurven 6 und 1 belegt.

Wie der Fig. weiter zu entnehmen ist, laufen alle Kurven asymptotisch auf einen Grenzwert zu. Hieraus lässt sich erkennen, dass die Partikelgröße an sich keinen Einfluss auf die Sorptionskapazität selbst, sondern ausschließlich auf die Sorptionskinetik hat. Wie bei reinem Molekularsieb muss die Verarbeitungszeit bei sehr kleinen Partikeln schnell erfolgen, da sonst eine Vorschädigung (durch Feuchtaufnahme) zwischen dem Zerkleinern und dem Wiegen nicht ausgeschlossen werden kann. Dies ist allerdings bei weitem nicht so kritisch, da das feingemahlene Trockenmittel stets von einer Polymermatrix umgeben ist, welche es davor schützt, Wasser oder ein Sorbenz ebenso schnell wie das eigentliche reine, in der Trockenmittel-Karte verarbeitete Trockenmittel zu sorbieren. Der Messfehler beim Wägen des Feinanteils im Mahlgut bzw. in den Zerkleinerungsprodukten von Trockenmittel-Karten ist also prinzipiell um Größenordnungen geringer als bei reinen Trockenmitteln.

Mit dem vorliegenden Verfahren ist es möglich, die Messzeit zur Bestimmung der Sorptionskapazität, insbesondere der aktuellen Sorptionskapazität und Restsorptionskapazität, eines Formkörpertrockenmittels, beispielsweise einer Trockenmittel-Karte, von etwa 200 Tagen auf unter 10 Tage zu reduzieren. Eine weitere Beschleunigung der benötigten Messzeit lässt sich durch eine Erhöhung der im Klimagerät eingestellten definierten Temperatur der definierten Atmosphäre erreichen.

Demnach kann in einem akzeptablen Zeitraum zwischen der Anlieferung und der Verarbeitung in der Produktion die Sorptionskapazität angelieferter Formkörpertrockenmittel, insbesondere von Trockenmittel-Karten, ermittelt werden. Auch die Qualität des von Lieferanten angelieferten Trockenmittels kann langfristig überprüft werden. Dies gibt einen wichtigen Einblick in die Sicherheit der Lieferkette sowie der Produktionsprozesse beim Lieferanten anhand der für den jeweiligen Anwender qualitätsbestimmenden Eigenschaften des Produkts.

**Patentansprüche**

1. Verfahren zur Bestimmung der aktuellen Sorptionskapazität eines in einer Polymermatrix eingebundenes Trockenmittel aufweisenden Formkörpertrockenmittels, **dadurch gekennzeichnet, dass** das Formkörpertrockenmittel mechanisch zerkleinert wird, die aufgefangenen Zerkleinerungsprodukte in einem Klimagerät einer eine definierte Temperatur und einen definierten Feuchtigkeitsgehalt aufweisenden Atmosphäre ausgesetzt werden und die aktuelle Sorptionskapazität als Funktion der Massenzunahme der Zerkleinerungsprodukte ermittelt wird.

2. Verfahren nach Anspruch 1, **dadurch gekennzeichnet, dass** die Zerkleinerungsprodukte in dem Klimagerät auf einer Waage aufliegend der definierten Atmosphäre ausgesetzt werden.

3. Verfahren nach Anspruch 1 oder 2, **dadurch gekennzeichnet, dass** die Sorptionskapazität nach einer bestimmten Aufenthaltsdauer in dem Klimagerät ermittelt wird.

4. Verfahren nach einem der Ansprüche 1 bis 3, **dadurch gekennzeichnet, dass** das Formkörpertrockenmittel mittels eines Mahlwerks, eines Zerspanwerkzeuges oder eines Compact Disc-Schredders zerkleinert wird.

5. Verfahren nach einem der Ansprüche 1 bis 4, **dadurch gekennzeichnet, dass** das Formkörpertrockenmittel zunächst in einem Compact Disc-Schredder vorzerkleinert und anschließend in einem Mahlwerk endzerkleinert wird.

**Claims**

1. Method of determining the current sorption capacity of a moulded part drying agent, comprising drying agent bound in a polymer matrix, **characterised in that** the moulded part drying agent is mechanically comminuted, the comminution products collected are exposed to an atmosphere having a defined temperature and a defined moisture content in an air-conditioning unit and the current sorption capacity is determined as a function of the increase in mass of the comminution products.

2. Method according to claim 1, **characterised in that** the comminution products are exposed to the defined atmosphere while lying on scales in the air-conditioning unit.

3. Method according to claim 1 or 2, **characterised in that** the sorption capacity is determined after a specified retention time in the air-conditioning unit.

4. Method according to one of claims 1 to 3, **characterised in that** the moulded part drying agent is comminuted by means of a grinder, a machining tool or a compact disc shredder.

5. Method according to one of claims 1 to 4, **characterised in that** the moulded part drying agent is first comminuted in a compact disc shredder and then subjected to a final comminution in a grinder.

**Revendications**

1. Procédé de détermination de la capacité de sorption actuelle d'un agent de séchage d'un corps moulé présentant un agent de séchage intégré dans une matrice de polymère, **caractérisé en ce que** l'agent de séchage du corps moulé est broyé mécaniquement, les produits broyés recueillis sont soumis dans un appareil de climatisation, à une atmosphère présentant une température définie et une teneur en humidité définie et la capacité de sorption actuelle est déterminée en fonction de l'augmentation de masse des produits broyés.

2. Procédé selon la revendication 1, **caractérisé en ce que** les produits broyés sont soumis dans l'appareil de climatisation à l'atmosphère définie alors qu'ils se trouvent sur une balance.

3. Procédé selon la revendication 1 ou 2, **caractérisé en ce que** la capacité de sorption est déterminée après une durée de séjour déterminée dans l'appareil de climatisation.

4. Procédé selon l'une des revendications 1 à 3, **caractérisé en ce que** l'agent de séchage du corps moulé est broyé avec un broyeur, un outil de découpe ou un broyeur à disque compact.

5. Procédé selon l'une des revendications 1 à 4, **caractérisé en ce que** l'agent de séchage du corps moulé est tout d'abord soumis à un pré-broyage dans un broyeur à disque compact et ensuite, est soumis à un broyage final dans un broyeur.

Fig.

Zeit [ Tage ]

Wasseraufnahme Δm/m bezogen auf
die Gesamtmasse der TM-Karte [%]

25 °C / 60 % r.F.